# EUROPÄISCHE PATENTSCHRIFT

(11) **EP 2 990 941 B1**
(45) Veröffentlichungstag und Bekanntmachung des Hinweises auf die Patenterteilung: **17.04.2019**
(21) Anmeldenummer: 15172489.5
(22) Anmeldetag: 17.06.2015
(51) Int. Cl.: G06F 8/70, G06F 8/34

(54) **COMPUTERIMPLEMENTIERTES VERFAHREN ZUR ERZEUGUNG EINES STEUERGERÄTEPROGRAMMCODES UND DIESBEZÜGLICHE MELDUNGSVERWALTUNGSUMGEBUNG**
COMPUTER-IMPLEMENTED METHOD FOR GENERATING A CONTROL DEVICE PROGRAM CODES AND RELATED REPORT MANAGEMENT ENVIRONMENT
PROCÉDÉ ASSISTÉ PAR ORDINATEUR DE PRODUCTION D'UN CODE DE PROGRAMME DE DISPOSITIF DE COMMANDE ET ENVIRONNEMENT CORRESPONDANT DE GESTION DE MESSAGES

(30) Priorität: 27.08.2014 DE 102014112256
(43) Veröffentlichungstag der Anmeldung: 02.03.2016
(73) Patentinhaber: dSPACE digital signal processing and control engineering GmbH, 33102 Paderborn (DE)
(72) Erfinder: Mair, Michael, 33098 Paderborn (DE)

(56) Entgegenhaltungen:
- US-A- 5 673 390

## Beschreibung

Die Erfindung betrifft ein computerimplementiertes Verfahren zur Erzeugung eines Steuergeräteprogrammcodes, wobei der Steuergeräteprogrammcode oder eine Zwischenrepräsentation bei der Erzeugung des Steuergeräteprogrammcodes aus wenigstens einem ersten Datenobjekt mit wenigstens einem ersten Softwarewerkzeug erzeugt wird, wobei das erste Softwarewerkzeug bei der Erzeugung des Steuergeräteprogrammcodes oder der Zwischenrepräsentation wenigstens eine Meldung zum Erzeugungsvorgang ausgibt und wobei eine computerimplementierte Meldungsverwaltungsumgebung die von dem Soft-warewerkzeug ausgegebene Meldung erfasst. Darüber hinaus betrifft die Erfindung auch eine solche Meldungsverwaltungsumgebung zur Verwaltung von auftretenden Meldungen bei der Erzeugung eines Steuergeräteprogrammcodes, wobei der Steuergeräteprogrammcode oder eine Zwischenrepräsentation bei der Erzeugung des Steuergeräteprogrammcodes aus wenigstens einem ersten Datenobjekt mit wenigstens einem ersten Softwarewerkzeug erzeugt wird, wobei das erste Softwarewerkzeug bei der Erzeugung des Steuergeräteprogrammcodes oder der Zwischenrepräsentation wenigstens eine Meldung zum Erzeugungs-vorgang ausgibt.

Die Erzeugung von Steuergeräteprogrammcode ist in der industriellen Praxis mittlerweile ein äußerst komplexer Vorgang, bei dem häufig eine Vielzahl von Softwarewerkzeugen zur Anwendung kommt. Unter Steuergeräten wer-den heute üblicherweise für den industriellen Einsatz hergerichtete robuste Kleinrechner verstanden, die meist über integrierte I/O-Schnittstellen verfügen. Auf den häufig mit einem Echtzeit-Betriebssystem ausgestatteten Steuergeräten werden Programme ausgeführt, die im weitesten Sinne über die I/O-Schnittstelle mit einem zu steuernden technischen Prozess in Verbindung treten und auf diesen Prozess in gewünschter Weise einwirken. Steuergeräte der beschriebenen Art werden beispielsweise intensiv im automotiven Bereich eingesetzt. Die Entwicklung von Steuergeräten und damit auch die Entwicklung von Steuergeräteprogrammcode ist mittlerweile ein bedeutender Bestandteil in der Entwicklung von Serienfahrzeugen.

Ein einfaches Beispiel für ein Softwarewerkzeug, mit dem Steuergerätepro-gramm aus einem Datenobjekt erzeugt wird, ist ein Compiler, der den in einer Hochsprache vorliegenden Programmcode in einen auf dem Ziel-Steuergerät ausführbaren Steuergeräteprogrammcode übersetzt, also beispielsweise in Form von Bytecode oder in Form einer maschinell ausführbaren Maschinensprache. Bei dem Datenobjekt handelte es sich dann um den Quellcode in einer Hochsprache.

In der Praxis wird Steuergeräteprogrammcode in großen Teilen nicht mehr durch fehlerträchtige manuelle Programmierung in einer Hochsprache erzeugt, vielmehr erfolgt die Formulierung der Funktionalität des Steuergeräteprogrammcodes auf einer abstrakteren Ebene, beispielsweise mit Hilfe einer grafischen Modellierungsumgebung, die die Abbildung der ge-wünschten Funktionalität in Form eines Blockschaltbildes erlaubt. In diesem Fall besteht ein Datenobjekt in einem grafischen Steuerungsmodell - oder auch in mehreren grafischen Steuerungsmodellen -, das dann automatisch in einen in einer Hochsprache abgefassten Programmcode übersetzt wird. Diese Codegenerierung kann über mehrere abstrakte Zwischenstufen erfolgen, in denen das zugrunde liegende Datenobjekt in Form des grafischen Steuerungsmodells in verschiedene abstrakte Zwischenrepräsentationen überführt wird. Der so über verschiedene Zwischenstufen entstandene, nicht ausführbare Steuergeräteprogrammcode in einer Hochsprache wird auch dann schlussendlich durch einen geeigneten Compiler in ausführbaren Steuergeräteprogrammcode übersetzt.

Wie aus den voranstehenden Erläuterungen ersichtlich ist, ist eine Mehrzahl an Softwarewerkzeugen an dem beschriebenen Verfahren zur Erzeugung eines Steuergeräteprogrammcodes oder von Zwischenrepräsentationen des Steuergeräteprogrammcodes beteiligt (grafische Modellierungsumgebung, Codegeneratoren, Compiler, dedizierte Codechecker usw.). Üblicherweise geben alle diese Softwarewerkzeuge Meldungen zum Erzeugungsvorgang aus, um den Nutzer auf den Erzeugungsvorgang betreffende Besonderheiten hinzuweisen. Dies können beispielsweise bei der grafischen Modellierungsumgebung Hinweise auf unverbundene Ports von Funktions-blöcken sein, Hinweise auf nicht zueinander passende Datentypen, Hinweise auf kollidierende Abtastzeiten usw. Der Compiler kann durch Meldungen in Form von Warnungen und Fehlermeldungen hinweisen auf nicht deklarierte oder uninitialisierte Variablen, nicht vorhandene Abbruchbedingungen in Schleifen, Divisionen durch Null, usw.

Die von den Softwarewerkzeugen ausgegebenen Meldungen sind für den Erzeugungsvorgang und für die Beurteilung des Erzeugungsvorgangs grund-sätzlich beachtlich und relevant. Dies ist alleine daran ersichtlich, dass es in verschiedenen Bereichen der Softwareentwicklung sogenannte "Null-Warnungen-Vorgaben" gibt, ein Steuergeräteprogrammcode also erst dann als tauglich erachtet wird, wenn in dem zum Steuergeräteprogrammcode führenden Erzeugungsvorgang von den Softwarewerkzeugen keine Warnungen mehr ausgegeben werden. Ähnliche Anforderungen sind in bestimmten Standards kodifiziert, beispielsweise im MISRA-Standard, der für die Erzeugung von Steuergeräteprogrammcode in der Automobilindustrie relevant ist, zunehmend aber auch für sicherheitskritische Anwendungen in anderen Industriebereichen Anwendung findet.

Es kann vorkommen, dass bestimmte Meldungen von Softwarewerkzeugen unvermeidlich sind oder auch Meldungen vom Nutzer als unkritisch erkannt werden, so dass das Vorkommen der Meldung nicht negativ ins Gewicht fällt bei der Beurteilung der Güte des Steuergeräteprogrammcodes. Gleichwohl müssen bei jedem weiteren Erzeugungsvorgang die Meldungen der Softwarewerkzeuge überprüft werden, was mit einem nicht unerheblichen Arbeitsaufwand verbunden ist.

Zur Verringerung dieses Arbeitsaufwands werden Meldungsverwaltungsumgebungen eingesetzt. Solche Meldungsverwaltungsumgebungen ermöglichen eine übersichtliche Darstellung und Handhabung von Fehlermeldungen. Sie erlauben dem Benutzer meist auch, zur Verbesserung der Übersichtlichkeit Fehlermeldungen auszublenden, die er für unkritisch erachtet. Wie beispielsweise in der Patentschrift US 5,673,390 beschrieben, kann es jedoch passieren, dass Meldungen versehentlich ausgeblendet werden, ohne dass überprüft wurde, ob sie wirklich unkritisch sind. So können Fehler übersehen werden, wodurch die Erzeugung des Steuergeräteprogrammcodes in uneffektiver Weise verzögert würde.

Aufgabe der vorliegenden Erfindung ist es daher, ein computerimplementiertes Verfahren zur Erzeugung von Steuergeräteprogrammcode so auszugestalten, dass die Beurteilung der während des Erzeugungsvorgangs von den Softwarewerkzeugen ausgegebenen Meldungen in effektiverer Weise ausgeführt werden kann.

Die zuvor aufgezeigte Aufgabe wird bei dem erläuterten computerimplementierten Verfahren unter Einsatz einer Meldungsverwaltungsumgebung dadurch gelöst, dass von der Meldungsverwaltungsumgebung zu der erfassten Meldung eine Qualifikation wenigstens als "offen" oder "gutgezeichnet" (englisch: "approved") erfasst wird und dass zu einer als "gutgezeichnet" qualifizierten Meldung von der Meldungsverwaltungsumgebung eine Qualifikationsvoraussetzung erfasst wird.

Eine Meldung würde dann als "offen" qualifiziert werden, wenn der Grund für die Meldung noch nicht geklärt werden konnte oder beispielsweise noch nicht abschließend feststeht, dass die Meldung unkritisch ist. Eine Meldung würde als "gutgezeichnet" qualifiziert werden, wenn der Grund für die Meldung erkennbar ist und die Meldung insgesamt als unkritisch eingestuft werden kann.

Von besonderer Bedeutung ist, dass von der Meldungsverwaltungsumgebung zu einer als "gutgezeichnet" qualifizierten Meldung wenigstens eine Qualifikationsvoraussetzung erfasst wird. Üblicherweise wird der Nutzer des Verfahrens eine solche Qualifikationsvoraussetzung formalsprachlich über eine Schnittstelle der Meldungsverwaltungsumgebung eingeben. Durch die Qualifikationsvoraussetzung ist es - auch automatisiert - immer wieder möglich, zu überprüfen, ob eine Meldung auch weiterhin als "gutgezeichnet" angesehen werden kann. Damit wird eine für den Erzeugungsvorgang des Steuergeräteprogrammcodes oder einer Zwischenrepräsentation des Steuergeräteprogrammcodes wesentliche Information, die die Bewertung des Erzeugungsvorganges gestattet, hinzugefügt.

Aus dem vorgenannten Grund ist es in einer Weiterentwicklung des erfindungsgemäßen Verfahrens möglich und vorgesehen, dass eine erfasste Mel-dung von der Meldungsverwaltungsumgebung daraufhin überprüft wird, ob die Meldung schon zuvor erfasst und als "gutgezeichnet" qualifiziert worden ist, wobei von der Meldungsverwaltungsumgebung im Falle der bereits existierenden Qualifikation als "gutgezeichnet" überprüft wird, ob die Qualifikationsvoraussetzung noch erfüllt ist. Diese Ausgestaltung des Verfahrens ist in ganz besonderer Weise vorteilhaft, da in jedem Fall überprüft werden kann und auch überprüft wird, ob immer noch die Voraussetzungen erfüllt sind, die dazu geführt haben, dass eine Meldung als unkritisch angesehen worden ist, also als "gutgezeichnet" erfasst worden ist. Eine einmal als "gutgezeichnet" erfasste Meldung ist in der Meldungsverwaltungsumgebung also nicht unabänderlich eine als "gutgezeichnet" qualifizierte Meldung, vielmehr wird immer wieder überprüft, ob das entscheidende Kriterium, dass zu der Gutzeichnung geführt hat, immer noch erfüllt ist.

Beispielsweise könnte eine Meldung der zum Einsatz kommenden grafischen Modellierungsumgebung darin bestehen, dass eine in dem grafischen Modell verwendete Variable nicht initialisiert ist, also keinen Anfangswert aufweist. Gleichwohl könnte diese Meldung als "gutgezeichnet" qualifiziert werden, wenn sichergestellt ist, dass zu Beginn des Erzeugungsvorganges immer eine Datei mit Initialisierungswerten für Variablen in die Modellierungsumgebung eingelesen wird. Eine Qualifikationsvoraussetzung könnte also darin bestehen, dass überprüft wird, ob die Datei mit Initialisierungswerten vorhanden ist und die Datei auch tatsächlich eine Wertezuweisung für die fragliche Variable enthält. Durch das computerimplementierte Verfahren wird also die Situation vermieden, dass eine "gutgezeichnete" Meldung weiterhin als "gutgezeichnet" angesehen wird, obwohl die Voraussetzung für die Gutzeichnung nicht mehr gegeben ist.

Eine für den Verwender des computerimplementierten Verfahrens besonders vorteilhafte Weiterentwicklung besteht darin, dass die Meldungsverwaltungsumgebung bei erfüllter Qualifikationsvoraussetzung die als "gutgezeichnet" qualifizierte Meldung unterdrückt. Alternativ oder zusätzlich wird bei nicht erfüllter Qualifikationsvoraussetzung die Meldung von der Meldungsverwaltungsumgebung als "nicht qualifiziert" (englisch: "unqualified") ausgegeben. Diese Erweiterung des Verfahrens ist insoweit hilfreich, als dass weiterhin als "gutgezeichnet" zu erachtende Meldungen dem Verwender des Verfahrens nicht wieder zu Kenntnis gebracht werden, da die betroffene Meldung weiterhin als unkritisch zu bewerten ist und daher keiner erneuten Behandlung bedarf. Genauso ist es natürlich sinnvoll, dass solche Meldungen, die ihre Qualifikation als "gutgezeichnet" mangels Erfüllung der Qualifikationsvoraussetzung eingebüßt haben, als erneut behandlungsbedürftig herausgestellt werden.

In einer weiteren Ausgestaltung des Verfahrens ist vorgesehen, dass das Auftreten einer bereits erfassten und qualifizierten Meldung bei einem neuen Durchgang der Erzeugung des Steuergeräteprogrammcodes wieder von der Meldungsverwaltungsumgebung erwartet wird. Das bedeutet, dass die Meldungsverwaltungsumgebung erfasst, welche Meldungen in einem vorigen Durchgang zur Erzeugung des Steuergeräteprogrammcodes aufgetreten und qualifiziert worden sind und bei einem neuen Durchgang der Erzeugung des Steuergeräteprogrammcodes das vorgemerkte Auftreten der Meldungen abgleicht mit den neu erfassten Meldungen. Vorzugsweise weist die Meldungsverwaltungsumgebung auf eine erwartete aber nicht erneut erfasste Meldung hin. Durch diese Maßnahme kann überprüft werden, ob der Erzeugungsvorgang ein erwartetes Verhalten auch tatsächlich zeigt. Insbesondere ist auch vorgesehen, dass die Meldungsverwaltungsumgebung auf eine zwar erwartete aber nicht erfasste Meldung aktiv hinweist.

Gemäß einer weiteren Ausgestaltung des Verfahrens ist vorgesehen, dass die Qualifikationsvoraussetzung in Abhängigkeit von zumindest einem Teil des ersten Datenobjekts formuliert wird, insbesondere die formulierte Qualifikationsvoraussetzung mit dem Teil des Datenobjekts verlinkt ist. Bei dem zuvor angesprochenen Beispiel mit der Datei, die Initialisierungswerte für Variablen enthält, würde also in die Meldungsverwaltungsumgebung ein Link auf diese Datei hinterlegt werden, ggf. mit einer Positionsangabe innerhalb der Datei, sodass die Meldungsverwaltungsumgebung insgesamt die Möglichkeit hätte, auf die Daten zuzugreifen, die der Qualifikationsvoraussetzung zugrunde liegen. Insbesondere ist vorgesehen, dass die Meldungsverwaltungsumgebung im Fall der nicht mehr erfüllten Qualifikationsvoraussetzung den Teil des Datenobjekts anzeigt, der die Qualifikationsvoraussetzung nicht mehr erfüllt. Dies erleichtert dem Verwender des Verfahrens die Überprüfung des Erzeugungsvorganges des Steuergeräteprogrammcodes ganz erheblich.

In einer weiteren Ausgestaltung des Verfahrens ist vorgesehen, dass eine Qualifikationsvoraussetzung auch bereits dann nicht als erfüllt angesehen wird, wenn die Qualifikationsvoraussetzungen für die Meldungsverwaltungs-umgebung nicht überprüfbar ist. Dies kann beispielsweise schon dann gegeben sein, wenn die Meldungsverwaltungsumgebung auf bestimmte - verlinkte - Daten nicht zugreifen kann, beispielsweise wegen einer fehlenden Lizenz, ohne die ein solcher Zugriff nicht möglich ist. In diesem Fall ist genau genommen nicht die Qualifikationsvoraussetzung unerfüllt, sondern es mangelt vielmehr an einer grundsätzlichen Überprüfbarkeit.

Von besonderer Vorteilhaftigkeit ist das beschriebene Verfahren, wenn mehrere Softwarewerkzeuge zum Einsatz kommen, so dass dann vorgesehen ist, dass bei der Erzeugung des Steuergeräteprogrammcodes oder der Zwischen-repräsentation zumindest von einem ersten Softwarewerkzeug und von einem zweiten Softwarewerkzeug Meldungen zum Erzeugungsvorgang ausgegeben werden und von der Meldungsverwaltungsumgebung die von den mehreren Softwarewerkzeugen ausgegebenen Meldungen erfasst werden und natürlich auch in der vorbeschriebenen Art und Weise behandelt werden. Dadurch ist es möglich, den Vorgang zur Erzeugung des Steuergeräteprogrammcodes in einer einheitlichen Arbeitsumgebung für alle beteiligten Softwarewerkzeuge hinsichtlich der ausgegebenen Meldungen zu überprüfen.

Durch die Berücksichtigung mehrerer Softwarewerkzeuge ergeben sich auch unerwartete Zusatznutzen, nämlich indem die Meldungen des ersten Softwarewerkzeugs und die Meldungen des zweiten Softwarewerkzeugs miteinander verknüpft werden können. Beispielsweise können so auch Qualifikationsvoraussetzungen für Meldungen des zweiten Softwarewerkzeugs in Abhängigkeit von Meldungen des ersten Softwarewerkzeugs formuliert werden und umgekehrt. Eine solche Abhängigkeit kann an folgendem Beispiel verdeutlicht werden: Bei dem ersten Softwarewerkzeug handelt es sich um einen Codegenerator, der eine graphische Funktionsbeschreibung in einen hochsprachlichen Steuergeräteprogrammcode übersetzt. Der Codegenerator erkennt, dass eine Variable innerhalb des Modells wertmäßig nicht initialisiert wird, weist dieser Variablen nach ANSI-Standard den Wert Null zu, meldet aber gleichwohl, dass die Variable (durch den Nutzer) nicht initialisiert worden ist. Bei dem zweiten Softwarewerkzeug handelt es sich um einen statischen Codechecker, der den vom Codegenerator erzeugten hochsprachlichen Steuergeräteprogrammcode überprüft, unter anderem auf Divisionen durch Null. Die Meldung des Codegenerators hinsichtlich der fehlenden nutzerseitigen Initialisierung der Variablen könnte als gutgezeichnet qualifiziert werden unter der Qualifikationsvoraussetzung, dass der Codechecker keine Meldung hinsichtlich einer Division durch Null zu dieser Variablen ausgibt.

Für die Meldungsverwaltungsumgebung bestehen verschiedene Möglichkeiten, die von den Softwarewerkzeugen ausgegebenen Meldungen zu erfassen. Häufig werden von den beteiligten Softwarewerkzeugen Logdateien ausgegeben, in denen die Meldungen abgelegt sind, so dass die Meldungsverwaltungsumgebung durch Parsen dieser Logdateien die Meldungen erfassen kann. Alternativ oder zusätzlich ist die Meldungsverwaltungsumgebung so ausgestaltet, dass sie eine von dem betreffenden Softwarewerkzeug zur Verfügung gestellte Schnittstelle zur Anwendungsprogrammierung, üblicherweise als Application Programming Interface (API) bezeichnet, verwendet.

Die eingangs skizzierte Aufgabe ist ferner bei der beschriebenen Meldungsverwaltungsumgebung dadurch gelöst, dass die computerimplementierte Meldungsverwaltungsumgebung so ausgestaltet und eingerichtet ist, dass die von dem Softwarewerkzeug ausgegebene Meldung von der Meldungsverwaltungsumgebung erfassbar ist, dass von der Meldungsverwaltungsumgebung zu der erfassten Meldung eine Qualifikation als "offen" oder "gutgezeichnet" erfassbar ist und dass zu einer erstmals als "gutgezeichnet" qualifizierten Meldung von der Meldungsverwaltungsumgebung eine Qualifikationsvoraussetzung erfassbar ist. Darüber hinaus verhält sich die hier vorgeschlagene Meldungsverwaltungsumgebung so, dass mit ihr das zuvor beschriebene Verfahren zur Erzeugung des Steuergeräteprogrammcodes umgesetzt wird und umsetzbar ist.

Im Einzelnen gibt es nun eine Vielzahl von Möglichkeiten, das erfindungsgemäße computerimplementierte Verfahren zur Erzeugung eines Steuergeräteprogrammcodes und die erfindungsgemäße Meldungsverwaltungsumgebung auszugestalten und weiterzubilden. Dazu wird verwiesen einerseits auf die den Patentansprüchen 1 und 11 nachgeordneten Patentansprüche, andererseits auf die folgende Beschreibung von Ausführungsbeispielen in Verbindung mit der Zeichnung. In der Zeichnung zeigen
Fig. 1 ein Verfahren zur Erzeugung eines Steuergeräteprogrammcodes bei dem Meldungen von einem Softwarewerkzeug ausgegeben und von einer Meldungsverwaltungsumgebung erfasst werden,
Fig. 2 ein Verfahren wie in Fig. 1 jedoch mit mehreren Datenobjekten und mehreren Softwarewerkzeugen,
Fig. 3 den Erzeugungsvorgang für Steuergeräteprogrammcode mit mehreren hintereinander ausgeführten Softwarewerkzeugen,
Fig. 4 ein Verfahren zur Meldungsverwaltung mit automatischer Über-prüfung von Qualifikationsvoraussetzungen,
Fig. 5 das Verfahren nach Fig. 4 mit verlinkten Datenobjekten,
Fig. 6 schematisch eine Meldungsverwaltungsumgebung mit Versionsangaben und Last-Change-Angaben zu Datenobjekten und
Fig. 7 eine grafische Anwenderschnittstelle für eine Meldungsverwaltungsumgebung.

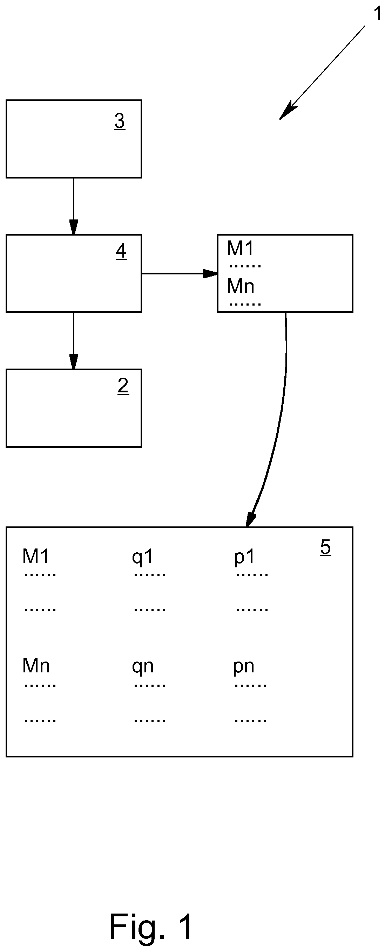

In den Fig. 1 bis 5 ist jeweils schematisch ein computerimplementiertes Ver-fahren 1 zur Erzeugung eines Steuergeräteprogrammcodes 2 dargestellt. Der Steuergeräteprogrammcode 2 wird aus wenigstens einem ersten Datenobjekt 3 mit einem ersten Softwarewerkzeug 4 erzeugt. Bei der Ausgestaltung gemäß Fig. 1 handelt es sich bei dem Datenobjekt 3 um Programmcode in einer Hochsprache, der von dem als Compiler ausgestalteten Softwarewerkzeug 4 in den - in diesem Fall ausführbaren - Steuergeräteprogrammcode 2 übersetzt wird. Das Softwarewerkzeug 4 gibt bei der Erzeugung des Steuergeräteprogramm-codes 2 Meldungen M1, Mn aus. In dem dargestellten Fallbeispiel handelt es sich bei den Meldungen um Warnungen und Fehlermeldungen des Compilers. Die von dem Softwarewerkzeug 4 ausgegebenen Meldungen M1, Mn werden von einer Meldungsverwaltungsumgebung 5 erfasst. Das Erfassen der Meldungen M1, Mn durch die Meldungsverwaltungsumgebung 5 erfolgt in dem Ausführungsbeispiel gemäß Fig. 1 über eine von dem Softwarewerkzeug 4 bereitgestellte Anwendungsprogrammierschnittstelle (API).

Das Verfahren 1 zur Erzeugung des Steuergeräteprogrammcodes 2 zeichnet sich nun dadurch aus, dass von der Meldungsverwaltungsumgebung 5 zu den erfassten Meldungen M1, Mn jeweils auch eine Qualifikation q1, qn erfasst wird, wobei die Qualifikation q1, qn zumindest mit den Werten "offen" oder "gutgezeichnet" belegt werden kann. Üblicherweise ist unter einer "gutge-zeichneten" Meldung M1, Mn eine solche Meldung M1, Mn zu verstehen, die als unkritisch für die Qualität des Steuergeräteprogrammcodes 2 angesehen wird, wohingegen als "offen" qualifizierte Meldungen M1, Mn als praktisch unbewertet und nicht qualifiziert anzusehen sind.

Ferner wird von der Meldungsverwaltungsumgebung 5 zu einer als "gutge-zeichnet" qualifizierten Meldung M1, Mn eine Qualifikationsvoraussetzung p1, pm erfasst. In den Qualifikationsvoraussetzungen p1, pn sind formal-sprachlich - und damit durch ein computerimplementiertes Verfahren automatisiert überprüfbar - die Bedingungen erfasst, die erfüllt sein müssen, damit die betreffende Meldung M1, Mn als "gutgezeichnet" anzusehen ist.

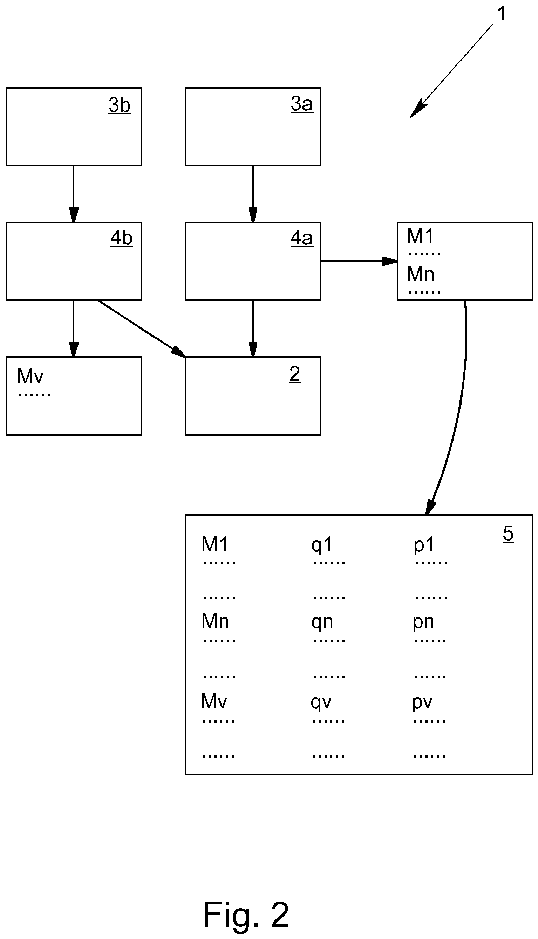

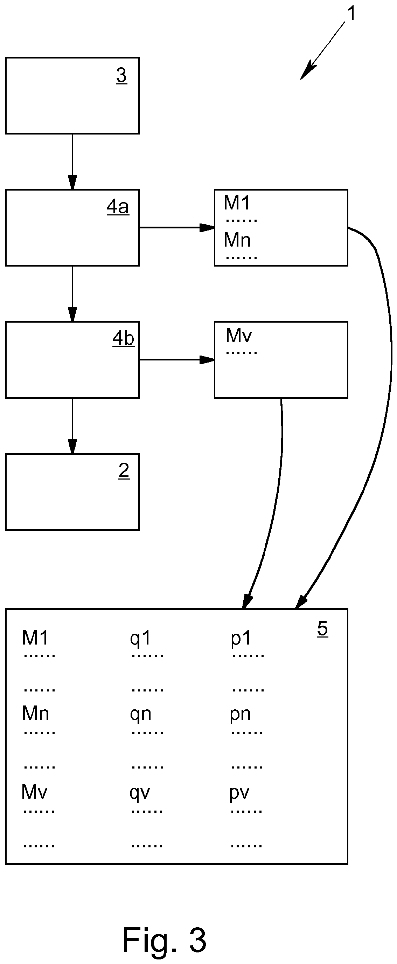

In den Fig. 2 und 3 sind zwei erweiterte Varianten des Verfahrens 1 zur Er-zeugung eines Steuergeräteprogrammcodes 2 gezeigt, die aufzeigen, dass das hier vorgestellte Verfahren 1 auch mit komplexeren Arbeitsabläufen ausge-führt werden kann. In Fig. 2 gibt es ein erstes Datenobjekt 3a und auch ein weiteres, zweites Datenobjekt 3b, wobei die unterschiedlichen Datenobjekte 3a, 3b von zwei verschiedenen Softwarewerkzeugen 4a, 4b genutzt werden. In dem dargestellten Ausführungsbeispiel handelt es sich bei den Datenobjekten 3a, 3b um hochsprachlichen Programmcode, der von den als Compilern ausgestalteten Softwarewerkzeugen 4a, 4b in den dann gemeinsam zur Ausführung kommenden ausführbaren Steuergeräteprogrammcode 2 übersetzt wird. Sowohl das erste Softwarewerkzeug 4a wie auch das weitere, zweite Softwarewerkzeug 4b erzeugen Meldungen M1, Mn, Mv, die von der Meldungsverwaltungsumgebung 5 wiederum erfasst werden, wobei die Meldungen M1, Mn, Mv mit Qualifikationen q1, qn, qv und mit diesen zugeordneten Qualifikationsvoraussetzungen p1, pn, pv versehen werden.

In Fig. 3 wird ebenfalls über zwei Softwarewerkzeuge 4a, 4b der Steuergeräteprogrammcode 2 erzeugt, wobei in diesem Fall jedoch die Softwarewerk-zeuge 4a, 4b hintereinander geschaltet sind. Im dargestellten Ausführungsbeispiel handelt es sich bei dem Datenobjekt 3 um ein grafisches Funktionsmodell, das von dem als Codegenerator ausgestalteten Softwarewerkzeug 4a zunächst in ein hochsprachliches Zwischenprodukt übersetzt wird - hier nicht ausdrücklich dargestellt -, wobei diese Zwischenrepräsentation dann von dem als Compiler ausgestalteten zweiten Softwarewerkzeug 4b letztendlich in den Steuergeräteprogrammcode 2 übersetzt wird. Sowohl der Codegenerator 4a wie auch der Compiler 4b geben wiederum Meldungen M1, Mn, Mv aus, die von der Meldungsverwaltungsumgebung 5 erfasst werden, genau wie die zugehörigen Qualifikationen q1, qn, qv und die jeweiligen Qualifikationsvoraussetzungen p1, pn, pv.

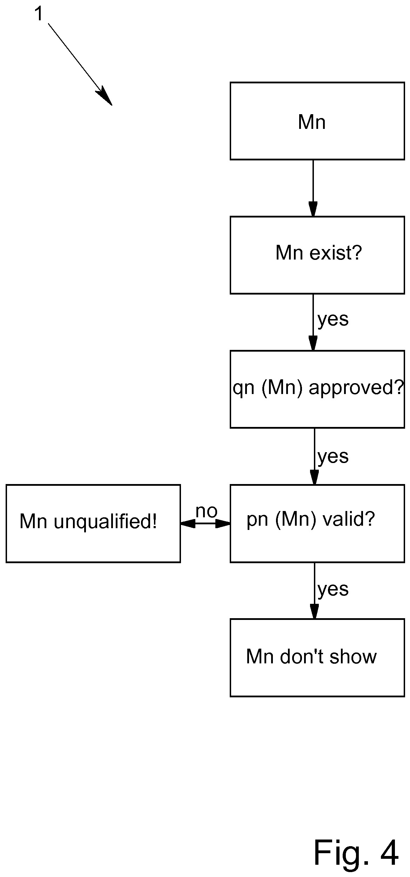

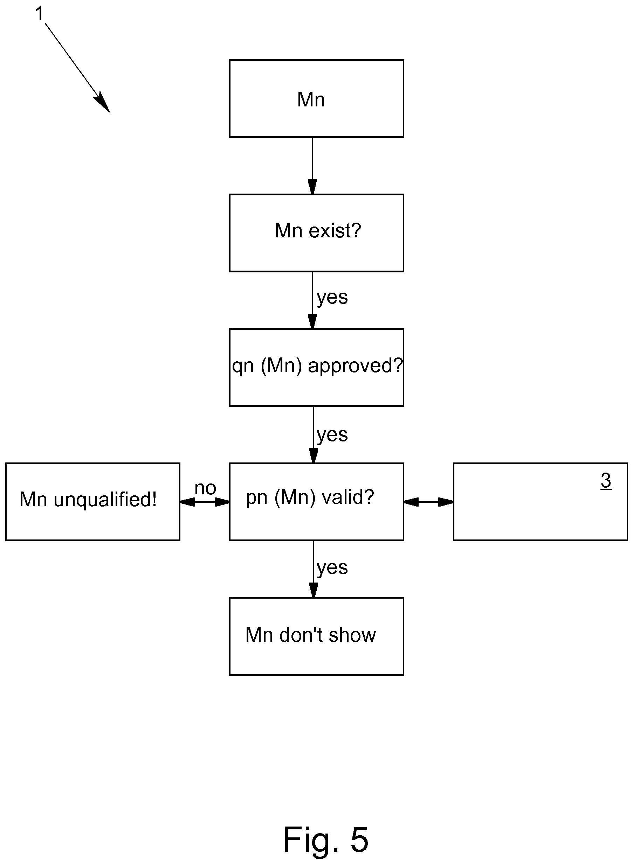

In den Fig. 4 und 5 sind besonders vorteilhafte Varianten des Verfahrens 1 zur Erzeugung eines Steuergeräteprogrammcodes 2 dargestellt. In beiden Ablaufdiagrammen ist zu erkennen, dass eine erfasste Meldung Mn von der in den Fig. 4 und 5 nicht ausdrücklich dargestellten Meldungsverwaltungsumgebung daraufhin überprüft wird, ob die Meldung Mn schon zuvor erfasst worden ist (Kästchen: "Mn exist?"). Für den Fall, dass Mn bereits erfasst worden ist, wird weiterhin überprüft, ob die Meldung Mn zuvor auch als "gutgezeichnet" qualifiziert worden ist (Kästchen: "qn(Mn) approved?"). Ist auch dies zutreffend, wird von der Meldungsverwaltungsumgebung überprüft, ob die zugehörige Qualifikationsvoraussetzung pn immer noch erfüllt ist (Kästchen: "pn(Mn) valid?"). Für den Fall, dass die Qualifikationsvoraussetzung pn der Nachricht Mn immer noch erfüllt ist und damit die Meldung Mn immer noch als "gutgezeichnet" zu qualifizieren ist, wird die Meldung Mn von der Meldungsverwaltungsumgebung 5 unterdrückt (Kästchen: "Mn don't show"). Für den Fall, dass die Qualifikationsvoraussetzung pn der Meldung Mn nicht mehr erfüllt ist, zeigt die Meldungsverwaltungsumgebung an, dass die Meldung Mn nicht mehr qualifiziert ist, also wieder qualifiziert werden muss. In einem anderen - hier nicht dargestellten - Ausführungsbeispiel erhält die Nachricht Mn bei nicht erfüllter Qualifikationsvoraussetzung pn einfach die Qualifikation "offen".

Der in Fig. 5 dargestellte Verfahrensverlauf unterscheidet sich von dem in Fig. 4 dargestellten Verfahrensablauf lediglich dadurch, dass die Meldungsverwaltungsumgebung bei der Überprüfung der Qualifikationsvoraussetzung pn (Kästchen: "pn(Mn) valid?) auf das Datenobjekt 3 zugreift, was dann möglich ist, wenn die Qualifikationsvoraussetzung pn in Abhängigkeit von zumindest einem Teil des Datenobjekts 3 formuliert ist, was vorliegend der Fall ist.

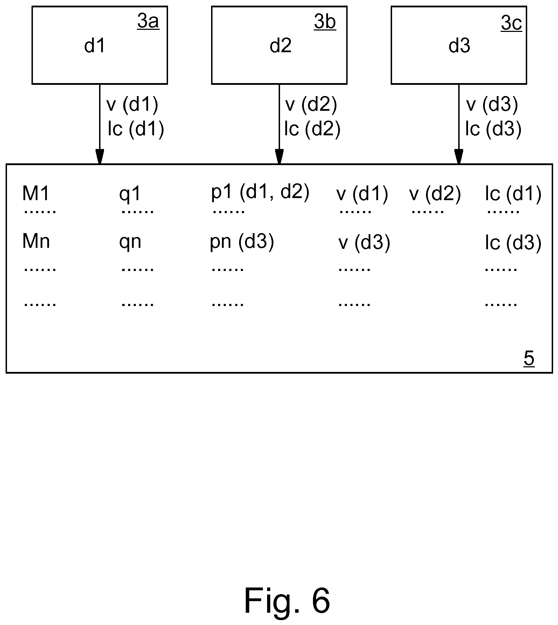

Das Ausführungsbeispiel für eine Meldungsverwaltungsumgebung 5 gemäß Fig. 6 zeigt, dass die Meldungsverwaltungsumgebung 5 über Versionsinformationen v hinsichtlich der Datenobjekte 3a, 3b, 3c verfügt, die zusätzlich als d1, d2 und d3 bezeichnet sind. Die Versionsinformation über das Datenobjekt d1 wird hier als v(d1) bezeichnet. Ferner verfügt die Meldungsverwaltungsumgebung 5 auch über Angaben zum letzten Änderungszeitpunkt (Last-Change-Datum, Ic) der verbundenen Datenobjekte 3a, 3b, 3c. Das Last-Change-Datum Ic des Datenobjekts d1 wird in der Darstellung als Ic(d1) bezeichnet. Bei der Meldungsverwaltungsumgebung 5 gemäß Fig. 6 sind die Qualifikationsvoraussetzungen p in Abhängigkeit von den Versionsinformationen v und den Last-Change-Daten Ic der verschiedenen Datenobjekte 3a, 3b, 3c formuliert. In anderen Ausführungsbeispielen sind die Qualifikationsvoraussetzungen p1, pn, pv auch lediglich nur in Abhängigkeit von einer Versionsinformation v oder nur in Abhängigkeit von einem Last-Change-Datum Ic formuliert.

Die Meldungsverwaltungsumgebung 5 gemäß Fig. 6 sieht eine Qualifikationsvoraussetzung p1, pn bereits dann als nicht erfüllt an, wenn sich das Datenobjekt 3a, 3b, 3c - oder ein relevanter Teil des Datenobjekts 3a, 3b, 3c -, zu dem eine Abhängigkeit in der Qualifikationsvoraussetzung p1, pn besteht, verändert hat gegenüber der Version v des Datenobjekts 3a, 3b, 3c zu dem Zeitpunkt, zu dem die Qualifikationsvoraussetzung p1, pn festgelegt worden ist oder sich die Versionsinformation v oder das Last-Change-Datum Ic des Datenobjekts 3 geändert hat gegenüber den in der Meldungsverwaltungsumgebung 5 erfassten Versionsinformationen v oder gegenüber den in der Meldungsverwaltungsumgebung 5 erfassten Last-Change-Daten Ic. Dieses Kriterium für die Nichterfüllung einer Qualifikationsvoraussetzung p1, pn ist zwar sehr unspezifisch, es wird dadurch jedoch bewirkt, dass eine Überprüfung der Meldungen M1, Mn, Mv, also auch jener Meldungen M1, Mn, Mv, die gutgezeichnet gewesen waren, neu erfolgt, wenn in dem Erzeugungsvorgang des Steuergeräteprogrammcodes 2 ein Versionssprung oder eine potentielle Änderung der zugrunde liegende Datenobjekte erkannt wird.

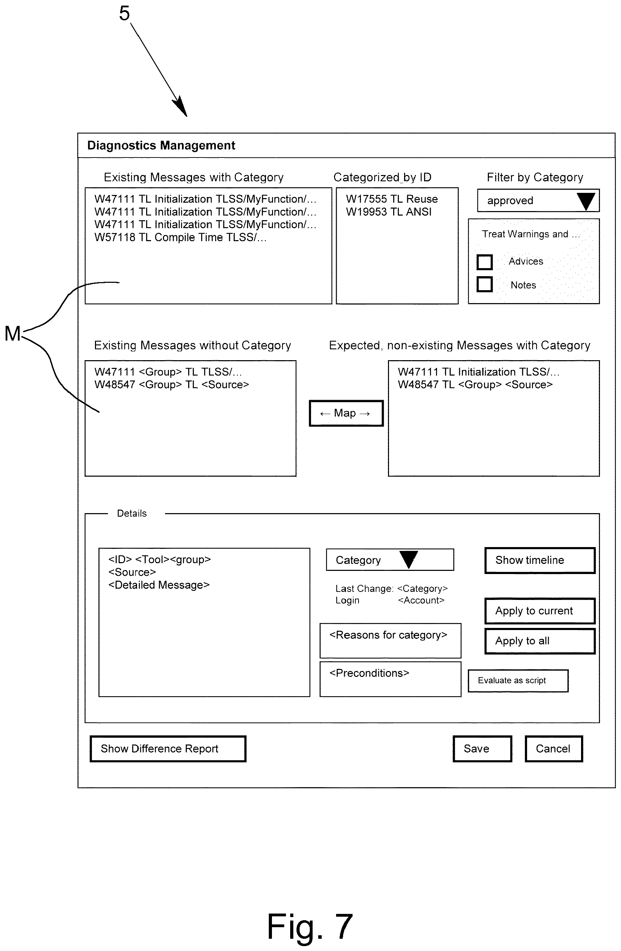

Fig. 7 zeigt eine mögliche Ausgestaltung der Oberfläche einer Meldungsverwaltungsumgebung 5, mittels derer die Meldungsverwaltungsumgebung 5 bedient und das Verfahren zur Erzeugung des Steuergeräteprogrammcodes durchgeführt werden kann.

Dargestellt sind hier die Meldungen M aus einem aktuellen Codegenerierungslauf, wobei die Meldungen M aufgegliedert sind in bereits qualifizierte ("with Category") und nicht qualifizierte ("without Category") Meldungen M. Es besteht die Möglichkeit der Filterung der Meldungen M nach ihrer Art (Warning / Advice / Note im Feld "Filter by Category"). In dem dargestellten Ausführungsbeispiel besteht die Möglichkeit der getrennten Anzeige von individuell qualifizierten Meldungen M ("Existing Messages with Category") und mittels eines Identifiers qualifizierten Meldungen ("Category assigned by ID").

Ferner besteht die Möglichkeit der Unterscheidung zwischen und Gegenüberstellung von bereits qualifizierten, erwarteten, aber noch nicht aufgetretenen Meldungen ("Expected, nonexisting Messages with Category") und noch nicht qualifizierten, aber aufgetreten Meldungen ("Existing Messages without Category")

Im unteren Teil der Oberfläche werden Details zu Meldungen M angezeigt, wenn diese aus den oberen Feldern z. B. per Mausklick ausgewählt werden. Dort können z. B. die Qualifikation (Category), der Grund für die Qualifikation oder die Qualifikationsvoraussetzung für die Qualifikation bearbeitet werden. Es können Details zu dem Softwarewerkzeug betrachtet werden, z. B. Herkunftswerkzeug (Tool), Group, Quellobjekt (optional), Messagetext, ggf. mit Navigation zum Quellobjekt (Block des graphischen Modells, Variablen-Datenbank).

Für die beiden Varianten "Existing Messages without Category" und "Expected, non- existing Messages with Category" gibt es (z. B. wegen Umbenennungen, die zu einer Änderung des Quellobjekt-Pfads führen) die Möglichkeit, eine alte Meldung mit einer neuen Meldung der gleichen ID oder des gleichen Quellobjekts zu identifizieren.

Für eine ausgewählte Meldung gibt es z.B. die Anzeige der letzten Qualifizierung, die Anzeige der Änderung der Qualifizierung (bzw. initiale Qualifizierung), die Anzeige einer objektweisen Änderungshistorie (inklusive Identifikation von geändertem Quellobjekt).

Eine Qualifikation kann für eine bestimmte Meldung vorgenommen werden ("Apply to current", <ID>+<Quellobjekt>) oder für mehrere Meldungen (Apply to all, <ID>).

## Patentansprüche

1. Computerimplementiertes Verfahren (1) zur Erzeugung eines Steuergeräteprogrammcodes (2), wobei der Steuergeräteprogrammcode (2) oder eine Zwischenrepräsentation bei der Erzeugung des Steuergeräteprogrammcodes (2) aus wenigstens einem ersten Datenobjekt (3) mit wenigstens einem ersten Softwarewerkzeug (4) erzeugt wird, wobei das erste Softwarewerkzeug (4) bei der Erzeugung des Steuergeräteprogrammcodes (2) oder der Zwischenrepräsentation wenigstens eine Meldung (M1, Mn, Mv) zum Erzeugungsvorgang ausgibt und wobei eine computerimplementierte Meldungsverwaltungsumgebung (5) die von dem Softwarewerkzeug (4) ausgegebene Meldung (M1, Mn, Mv) erfasst,
**dadurch gekennzeichnet,**
**dass** von der Meldungsverwaltungsumgebung (5) zu der erfassten Meldung (M1, Mn, Mv) eine Qualifikation (q1, qn, qv) wenigstens als "offen" erfasst wird, wenn die Meldung (M1, Mn, Mv) noch unbewertet ist, oder über eine Schnittstelle der Meldungsverwaltungsumgebung (5) als "gutgezeichnet" erfasst wird, wenn die Meldung (M1, Mn, Mv) als "unkritisch" für die Qualität des Steuergeräteprogrammcodes eingestuft wurde, und dass zu einer als "gutgezeichnet" qualifizierten Meldung (M1, Mn, Mv) von der Meldungsverwaltungsumgebung (5) über die Schnittstelle der Meldungsverwaltungsumgebung (5) eine von der Meldungsverwaltungsumgebung (5) überprüfbare Qualifikationsvoraussetzung (p1, pn, pv) erfasst wird, wobei eine erfasste Meldung (M1, Mn, Mv) von der Meldungsverwaltungsumgebung (5)
daraufhin überprüft wird, ob die Meldung schon zuvor erfasst und als "gutgezeichnet" qualifiziert worden ist und von der Meldungsverwaltungsumgebung (5), im Falle der bereits existierenden Qualifikation (q1, qn, qv) als "gutgezeichnet", überprüft wird, ob die Qualifikationsvoraussetzung (p1, pn, pv) noch erfüllt ist und dass bei nicht erfüllter Qualifikationsvoraussetzung (p1, pn, pv) die Meldung
(M1, Mn, Mv) von der Meldungsverwaltungsumgebung (5) als "nichtqualifiziert" ausgegeben wird.

2. Computerimplementiertes Verfahren (1) nach Anspruch 1, **dadurch gekennzeichnet, dass** bei erfüllter Qualifikationsvoraussetzung (p1, pn, pv) die als "gutgezeichnet" qualifizierte Meldung (M1, Mn, Mv) von der Meldungsverwaltungsumgebung (5) unterdrückt wird.

3. Computerimplementiertes Verfahren (1) nach einem der Ansprüche 1 bis 2, **dadurch gekennzeichnet, dass** das Auftreten einer bereits erfassten und qualifizierte Meldung (M1, Mn, Mv) bei einem neuen Durchgang der Erzeugung des Steuergeräteprogrammcodes (2) wieder von der Meldungsverwaltungsumgebung (5) erwartet wird, insbesondere wobei die Meldungsverwaltungsumgebung (5) auf eine erwartete aber nicht erneut erfasste Meldung (M1, Mn, Mv) hinweist.

4. Computerimplementiertes Verfahren (1) nach einem der Ansprüche 1 bis 3, **dadurch gekennzeichnet, dass** die Qualifikationsvoraussetzung (p1, pn, pv) in Abhängigkeit von zumindest einem Teil des ersten Datenobjekts (3) formuliert wird, insbesondere die formulierte Qualifikationsvoraussetzung (p1, pn, pv) mit dem Teil des Datenobjekts (3) verlinkt ist, insbesondere die Meldungsverwaltungsumgebung (5) den Teil des Datenobjekts (3) anzeigt im Fall der nicht mehr erfüllten Qualifikationsvoraussetzung (p1, pn, pv).

5. Computerimplementiertes Verfahren (1) nach einem der Ansprüche 1 bis 4, **dadurch gekennzeichnet, dass** zum ersten Datenobjekt (3) oder zu dem Teil des ersten Datenobjekts (3) in der Meldungsverwaltungsumgebung (5) eine Versionsinformation (v) und/oder ein Last-Change-Datum (Ic) erfasst wird und eine Qualifikationsvoraussetzung (p1, pn, pv) in Abhängigkeit von der Versionsinformation (v) und/oder in Abhängigkeit von dem Last-Change-Datum (Ic) von der Meldungsverwaltungsumgebung (5) überprüft wird.

6. Computerimplementiertes Verfahren (1) nach Anspruch 4 oder 5, **dadurch gekennzeichnet, dass** eine Qualifikationsvoraussetzung (p1, pn, pv) bereits dann als nicht mehr erfüllt von der Meldungsverwaltungsumgebung (5) bewertet wird, wenn sich das Datenobjekt (3) oder zumindest der eine Teil des Datenobjekts (3) verändert hat gegenüber der Version (v) des Datenobjekts (3) zu dem Zeitpunkt, zu dem die Qualifikationsvoraussetzung (p1, pn, pv) festgelegt worden ist oder sich die Versionsinformation (v) oder das Last-Change-Datum (Ic) des Datenobjekts (3) oder des einen Teils des Datenobjekts (3) geändert hat gegenüber der in der Meldungsverwaltungsumgebung (5) erfassten Versionsinformation (v) oder gegenüber dem in der Meldungsverwaltungsumgebung (5) erfassten Last-Change-Datum (Ic).

7. Computerimplementiertes Verfahren (1) nach einem der Ansprüche 1 bis 6, **dadurch gekennzeichnet, dass** von der Meldungsverwaltungsumgebung (5) zusätzlich zu der Qualifikationsvoraussetzung (p1, pn, pv) eine Qualifikationsbegründung erfasst wird, die Qualifikationsbegründung von der Meldungsverwaltungsumgebung (5) insbesondere dann angezeigt wird, wenn die Qualifikationsvoraussetzung (p1, pn, pv) von der Meldungsverwaltungsumgebung (5) als nicht erfüllt angesehen wird.

8. Computerimplementiertes Verfahren (1) nach einem der Ansprüche 1 bis 7, **dadurch gekennzeichnet, dass** bei der Erzeugung des Steuergeräteprogrammcodes (2) oder der Zwischenrepräsentation zumindest von einem ersten Softwarewerkzeug (4a) und von einem zweiten Softwarewerkzeug (4b) Meldungen zum Erzeugungsvorgang ausgegeben werden und von der Meldungsverwaltungsumgebung (5) die von den mehreren Softwarewerkzeugen (4a, 4b) ausgegebenen Meldungen (M1, Mn, Mv) erfasst werden.

9. Computerimplementiertes Verfahren (1) nach einem der Ansprüche 1 bis 8, **dadurch gekennzeichnet, dass** die Meldungsverwaltungsumgebung (5) die von dem Softwarewerkzeug (4) bzw. von den Softwarewerkzeugen (4a, 4b) ausgegebenen Meldungen durch Parsen einer Logdatei und/oder durch Anwendungsprogrammierschnittstelle
des Softwarewerkzeugs (4, 4a, 4b) erfasst.

10. Computerimplementiertes Verfahren (1) nach einem der Ansprüche 1 bis 9, **dadurch gekennzeichnet, dass** eine von dem Softwarewerkzeug (4) ausgegebene Meldung eine Fehlermeldung ist, die die Ausführbarkeit des Steuergeräteprogrammcodes (2) auf einem Steuergeräteprozessor betrifft.

11. Meldungsverwaltungsumgebung (5) zur Verwaltung von auftretenden Meldungen (M1, Mn, Mv) bei der Erzeugung eines Steuergeräteprogramm-codes (2), wobei der Steuergeräteprogrammcode oder eine Zwischenrepräsentation bei der Erzeugung des Steuergeräteprogrammcodes (2) aus wenigstens einem ersten Datenobjekt (3) mit wenigstens einem ersten Softwarewerkzeug (4) erzeugt wird, wobei das erste Softwarewerkzeug (4) bei der Erzeugung des Steuergeräteprogrammcodes (2) oder der Zwischenrepräsentation wenigstens eine Meldung (M1, Mn, Mv) zum Erzeugungsvorgang ausgibt, **dadurch gekennzeichnet,**
**dass** die computerimplementierte Meldungsverwaltungsumgebung (5) so ausgestaltet und eingerichtet ist, dass die von dem Softwarewerkzeug (4) ausgegebene Meldung (M1, Mn, Mv) von der Meldungsverwaltungsumgebung (5) erfassbar ist, dass von der Meldungsverwaltungsumgebung (5) zu der erfassten Meldung (M1, Mn, Mv) eine Qualifikation (q1, qn, qv) als "offen" erfassbar ist, wenn die Meldung (M1, Mn, Mv) noch unbewertet ist oder über eine Schnittstelle der Meldungsverwaltungsumgebung (5) als "gutgezeichnet" erfassbar ist, wenn die Meldung (M1, Mn, Mv) als "unkritisch" für die Qualität des Steuergeräteprogrammcodes eingestuft wurde und dass zu einer
erstmals als "gutgezeichnet" qualifizierten Meldung (M1, Mn, Mv) von der Meldungsverwaltungsumgebung (5) über die Schnittstelle der Meldungsverwaltungsumgebung (5) eine von der Meldungsverwaltungsumgebung (5) überprüfbare Qualifikationsvoraussetzung (p1, pn, pv) erfassbar
ist, und dass eine erfasste Meldung (M1, Mn, Mv) von der Meldungsverwaltungsumgebung (5) daraufhin überprüfbar ist, ob die Meldung schon zuvor erfasst und als "gutgezeichnet" qualifiziert worden ist und von der Meldungsverwaltungsumgebung (5), im Falle der bereits existierenden Qualifikation (q1, qn, qv) als "gutgezeichnet", überprüfbar ist, ob die Qualifikationsvoraussetzung (p1, pn, pv) noch erfüllt ist und dass bei nicht erfüllter Qualifikationsvoraussetzung (p1, pn, pv) die Meldung (M1, Mn, Mv) von der Meldungsverwaltungsumgebung (5) als "nichtqualifiziert" ausgebbar ist.

12. Meldungsverwaltungsumgebung (5) nach Anspruch 11, **gekennzeichnet durch** die Merkmale des Kennzeichnungsteils wenigstens eines Anspruchs der Ansprüche 2 bis 10.

## Claims

1. A computer-implemented method (1) for generating a control device program code (2), the control device program code (2) or an intermediate representation being generated from at least one first data object (3) by means of at least one first software tool (4) when generating the control device program code (2), the first software tool (4) outputting a message (M1, Mn, Mv) about the generating process when generating the control device program code (2), and a computer-implemented message management environment (5) capturing the message (M1, Mn, Mv) output by the software tool (4),
**characterized in that**
a qualification (q1, qn, qv) as at least "open" is recorded by the message management environment (5) about the recorded message (M1, Mn, Mv) if the message (M1, Mn, Mv) has not yet been evaluated, or is recorded as "good" by means of an interface of the message management environment (5) if the message (M1, Mn, Mv) has been classified as "noncritical" for the quality of the control device program code, and that a qualification condition (p1, pn, pv) verifiable by the message management environment (5) is recorded by the message management environment (5) by means of the interface of the message management environment (5) for a message (M1, Mn, Mv) qualified as "good", wherein a recorded message (M1, Mn, Mv) is verified by the message management environment (5) to determine whether the message has been previously recorded and qualified as "good," and the message management environment (5) verifies, in the case of a previously existing qualification condition (q1, qn, qv) as "good," whether the qualification condition (p1, pn, pv) is still met, and that if the qualification condition (p1, pn, pv) is not met, the message is output by the message management environment (5) as "not qualified."

2. The computer-implemented method (1) according to claim 1, **characterized in that** if the qualification condition (p1, pn, pv) is met, the message (M1, Mn, Mv) qualified as "good" is suppressed by the message management environment (5) .

3. The computer-implemented method (1) according to any one of the claims 1 through 2, **characterized in that** a previously recorded and qualified message (M1, Mn, Mv) is expected to occur again by the message management environment (5) for a new round of generating the control device program code (2), particularly wherein the message management environment (5) indicates an expected but not yet again recorded message (M1, Mn, Mv).

4. The computer-implemented method (1) according to any one of the claims 1 through 3, **characterized in that** the qualification condition (p1, pn, pv) is formulated as a function of at least one part of the first data object (3), particularly the formulated qualification condition (p1, pn, pv) is linked to the part of the data object (3), particularly the message management environment (5) indicates the part of the data object (3) in the case that the qualification condition (p1, pn, pv) is no longer met.

5. The computer-implemented method (1) according to any one of the claims 1 through 4, **characterized in that** a version information (v) and/or a last-change date (lc) is recorded for the first data object (3) or for the part of the first data object (3) in the message management environment (5), and a qualification condition (p1, pn, pv) is verified by the message management environment (5) as a function of the version information (v) and/or as a function of the last-change data (lc).

6. The computer-implemented method (1) according to claim 4 or 5, **characterized in that** q qualification condition (p1, pn, pv) is evaluated by the message management environment (5) as no longer met if the data object (3) or at least part of the data object has been modified relative to the version (v) of the data object (3) at the point in time at which the qualification condition (p1, pn, pv) was defined, or the version information (v) or the last-change date (lc) of the data object (3) or of the part of the data object (3) has changed relative to the version information (v) recorded in the message management environment (5) or relative to the last-change date (lc) recorded in the message management environment (5).

7. The computer-implemented method (1) according to any one of the claims 1 through 6, **characterized in that** a qualification justification is recorded by the message management environment (5) in addition to the qualification condition (p1, pn, pv), the qualification justification is displayed by the message management environment (5) particularly when the qualification condition (p1, pn, pv) is considered by the message management environment (5) to be not met.

8. The computer-implemented method (1) according to any one of the claims 1 through 7, **characterized in that** messages about the generating process are output at least by a first software tool (4a) and by a second software tool (4b) when generating the control device program code (2) or the intermediate representation, and the messages (M1, Mn, Mv) output by the plurality of software tools (4a, 4b) are recorded by the message management environment (5).

9. The computer-implemented method (1) according to any one of the claims 1 through 8, **characterized in that** the message management environment (5) records the messages output by the software tool (4) or software tools (4a, 4b) by parsing a log file and/or by an application programming interface of the software tool (4, 4a, 4b).

10. The computer-implemented method (1) according to any one of the claims 1 through 9, **characterized in that** a message output by the software tool (4) is an error message relating to the ability to execute the control device program code (2) on a control device processor.

11. A message management environment (5) for managing messages (M1, Mn, Mv) occurring when generating a control device program code (2), the control device program code or an intermediate representation being generated from at least one first data object (3) by means of at least one first software tool (4) when generating the control device program code (2), the first software tool (4) outputting at least one message (M1, Mn, Mv) about the generating process when generating the control device program code (2) or the intermediate representation, **characterized in that** the computer-implemented message management environment (5) is designed and set up such that the message (M1, Mn, Mv) output by the software tool (4) can be recorded by the message management environment (5), that a qualification (q1, qn, qv) about the recorded message (M1, Mn, Mv) can be recorded as "open" by the message management environment (5) if the message has not yet been evaluated, or can be recorded as "good" by means of an interface of the message management environment (5) if the message (M1, Mn, Mv) has been classified as "noncritical" for the quality of the control device program code, and that a qualification condition (p1, pn, pv) verifiable by the message management environment (5) can be recorded by the message management environment (5) by means of the interface of the message management environment (5) for a message (M1, Mn, Mv) initially qualified as "good", and that a recorded message (M1, Mn, Mv) can be verified by the message management environment (5) to determine whether the message has been previously recorded and qualified as "good," and the message management environment (5) can verify, in the case of a previously existing qualification condition (q1, qn, qv) as "good," whether the qualification condition (p1, pn, pv) is still met, and that if the qualification condition (p1, pn, pv) is not met, the message (M1, Mn, Mv) can be output by the message management environment (5) as "not qualified."

12. The message management environment (5) according to claim 11, **characterized by** the features of the characterizing portion of at least one of the claims 2 through 10.

## Revendications

1. Procédé (1) mis en oeuvre par ordinateur pour générer un code (2) de programme d'appareil de commande, dans lequel le code (2) de programme d'appareil de commande ou une représentation intermédiaire est généré pendant la génération du code (2) de programme d'appareil de commande à partir d'au moins un premier objet de données (3) avec au moins un premier outil logiciel (4), dans lequel le premier outil logiciel (4) livre au moins un message (M1, Mn, Mv) relatif au processus de génération lors de la génération du code (2) de programme d'appareil de commande ou de la représentation intermédiaire et dans lequel un environnement (5) de gestion des messages mis en oeuvre par ordinateur enregistre le message (M1, Mn, Mv) livré par l'outil logiciel (4),
**caractérisé en ce que**
une qualification (q1, qn, qv) sur le message (M1, Mn, Mv) enregistré est enregistrée par l'environnement de gestion des messages (5) au moins comme « en suspens » si le message (M1, Mn, Mv) est encore non évalué, ou comme « bien enregistré » via une interface de l'environnement de gestion de messages (5) si le message (M1, Mn, Mv) a été classé comme « non critique » pour la qualité du code de programme d'appareil de commande, et que pour un message (M1, Mn, Mv) qualifié de « bien enregistré », une condition préalable de qualification (p1, pn, pv) vérifiable par l'environnement (5) de gestion des messages est enregistrée par l'environnement (5) de gestion des messages via l'interface de l'environnement (5) de gestion des messages, sachant qu'un message (M1, Mn, Mv) enregistré est vérifié par l'environnement (5) de gestion des messages pour déterminer si le message a déjà été auparavant enregistré et qualifié de « bien enregistré » et l'environnement (5) de gestion des messages, en cas d'existence de la qualification (q1, qn, qv) comme « bien enregistré », vérifie si la condition préalable de qualification (p1, pn, pv) est toujours remplie et que, si la condition préalable de qualification (p1, pn, pv) n'est pas remplie, le message (M1, Mn, Mv) est émis comme « non qualifié » par l'environnement (5) de gestion des messages.

2. Procédé (1) mis en oeuvre par ordinateur selon la revendication 1, **caractérisé en ce que**, si la condition préalable de qualification (p1, pn, pv) est satisfaite, le message (M1, Mn, Mv) qualifié de « bien enregistré » est supprimé par l'environnement (5) de gestion des messages.

3. Procédé (1) mis en oeuvre par ordinateur selon l'une des revendications 1 à 2, **caractérisé en ce que** l'apparition d'un message (M1, Mn, Mv) déjà détecté et qualifié est à nouveau attendue par l'environnement (5) de gestion des messages lors d'une nouvelle exécution de la génération du code (2) de programme d'appareil de commande, en particulier, sachant que l'environnement (5) de gestion des messages signale un message (M1, Mn, Mv) attendu, mais qui n'est pas à nouveau enregistré.

4. Procédé (1) mis en oeuvre par ordinateur selon l'une des revendications 1 à 3, **caractérisé en ce que** la condition préalable de qualification (p1, pn, pv) est formulée en fonction d'au moins une partie du premier objet de données (3), en particulier, la condition préalable de qualification (p1, pn, pv) formulée est liée à la partie de l'objet de données (3), en particulier, l'environnement (5) de gestion des messages affiche la partie de l'objet de données (3) dans le cas où la condition préalable de qualification (p1, pn, pv) n'est plus satisfaite.

5. Procédé (1) mis en oeuvre par ordinateur selon l'une des revendications 1 à 4, **caractérisé en ce que**, pour le premier objet de données (3) ou pour la partie du premier objet de données (3), une information de version (v) et/ou une date de dernière modification (lc) est/sont enregistrée(s) dans l'environnement (5) de gestion des messages et une condition préalable de qualification (p1, pn, pv) est vérifiée par l'environnement (5) de gestion des messages en fonction de l'information de version (v) et/ou en fonction de la date de dernière modification (lc).

6. Procédé (1) mis en oeuvre par ordinateur selon la revendication 4 ou 5, **caractérisé en ce qu'**une condition préalable de qualification (p1, pn, pv) est déjà évaluée comme n'étant plus remplie par l'environnement (5) de gestion des messages si l'objet de données (3) ou au moins la partie de l'objet de données (3) a changé par rapport à la version (v) de l'objet de données (3) au moment auquel la condition préalable de qualification (p1, pn, pv) a été déterminée ou si l'information de version (v) ou la date de dernière modification (lc) de l'objet de données (3) ou de la partie de l'objet de données (3) a/ont changé par rapport à l'information de version (v) enregistrée dans l'environnement (5) de gestion des messages ou par rapport à la date de dernière modification (lc) enregistrée dans l'environnement (5) de gestion de messages.

7. Procédé (1) mis en oeuvre par ordinateur selon l'une des revendications 1 à 6, **caractérisé en ce que**, en plus de la condition préalable de qualification (p1, pn, pv), une justification de qualification est enregistrée par l'environnement (5) de gestion des messages, la justification de qualification est affichée par l'environnement (5) de gestion des messages en particulier si la condition préalable de qualification (p1, pn, pv) est considérée comme non remplie par l'environnement (5) de gestion des messages.

8. Procédé (1) mis en oeuvre par ordinateur selon l'une des revendications 1 à 7, **caractérisé en ce que**, lors de la génération du code (2) de programme d'appareil de commande ou de la représentation intermédiaire, des messages relatifs au processus de génération sont émis au moins par un premier outil logiciel (4a) et par un second outil logiciel (4b) et les messages (M1, Mn, Mv) émis par les plusieurs outils logiciels (4a, 4b) sont enregistrés par l'environnement (5) de gestion des messages.

9. Procédé (1) mis en oeuvre par ordinateur selon l'une des revendications 1 à 8, **caractérisé en ce que** l'environnement (5) de gestion des messages enregistre les messages émis par l'outil logiciel (4) ou par les outils logiciels (4a, 4b) en analysant un fichier journal et/ou par une interface de programmation d'applications de l'outil logiciel (4, 4a, 4b).

10. Procédé (1) mis en oeuvre par ordinateur selon l'une des revendications 1 à 9, **caractérisé en ce qu'**un message émis par l'outil logiciel (4) est un message d'erreur relatif à l'exécutabilité du code (2) de programme d'appareil de commande sur un processeur de l'appareil de commande.

11. Environnement (5) de gestion de messages pour gérer des messages (M1, Mn, Mv) lors de la génération d'un code (2) de programme d'appareil de commande, dans lequel le code de programme d'appareil de commande ou une représentation intermédiaire est généré pendant la génération du code (2) de programme d'appareil de commande à partir d'au moins un premier objet de données (3) avec au moins un premier outil logiciel (4), dans lequel le premier outil logiciel (4) livre au moins un message (M1, Mn, Mv) relatif au processus de génération lors de la génération du code (2) de programme d'appareil de commande ou de la représentation intermédiaire **caractérisé en ce que**
l'environnement (5) de gestion des messages mis en oeuvre sur ordinateur est conçu et configuré de manière à ce que le message (M1, Mn, Mv) livré par l'outil logiciel (4) puisse être enregistré par l'environnement (5) de gestion des messages, **en ce qu'**une qualification (q1, qn, qv) puisse être enregistrée comme « en suspens » par l'environnement (5) de gestion des messages pour le message (M1, Mn, Mv) enregistré si le message (M1, Mn, Mv) est encore non évalué, ou puisse être enregistré comme « bien enregistré » via une interface de l'environnement (5) de gestion des messages si le message (M1, Mn, Mv) a été classé comme « non critique » pour la qualité du code de programme d'appareil de commande, **en ce que** pour un message (M1, Mn, Mv) qualifié comme « bien enregistré » pour la première fois, une condition préalable de qualification (p1, pn, pv) vérifiable par l'environnement (5) de gestion des messages peut être enregistrée par l'environnement (5) de gestion des messages via l'interface de l'environnement (5) de gestion des messages, et **en ce qu'**un message (M1, Mn, Mv) enregistré peut être vérifié par l'environnement (5) de gestion des messages pour déterminer si le message a déjà été enregistré auparavant et qualifié comme « bien enregistré » par l'environnement (5) de gestion de messages, et l'environnement (5) de gestion des messages, en cas d'existence de la qualification (q1, qn, qv) comme « bien enregistré », peut vérifier si la condition préalable de qualification (p1, pn, pv) est toujours remplie et, si la condition préalable de qualification (p1, pn, pv) n'est pas remplie, le message (M1, Mn, Mv) est émis comme « non qualifié » par l'environnement (5) de gestion des messages.

12. Environnement (5) de gestion de messages selon la revendication 11, **caractérisé par** les caractéristiques de la partie de caractérisation d'au moins une revendication des revendications 2 à 10.
